Europäisches Patentamt

European Patent Office

Office européen des brevets

(11) Publication number: **0 400 793**
**A2**

# EUROPEAN PATENT APPLICATION

(21) Application number: **90303866.9**

(22) Date of filing: **10.04.90**

(51) Int. Cl.⁵: **G11B 5/127, G11B 5/17**

(30) Priority: **02.06.89 US 360334**

(43) Date of publication of application:
**05.12.90 Bulletin 90/49**

(84) Designated Contracting States:
**AT BE CH DE DK ES FR GB GR IT LI LU NL SE**

(71) Applicant: **DIGITAL EQUIPMENT
CORPORATION**
**111 Powdermill Road**
**Maynard Massachusetts 01754-1418(US)**

(72) Inventor: **Mallary, Michael L.**
**113 Boylston Road**
**Berlin, Massachusetts 01503(US)**

(74) Representative: **Goodman, Christopher et al**
**Eric Potter & Clarkson St. Mary's Court St.
Mary's Gate
Nottingham NG1 1LE(GB)**

(54) **Transducer with improved inductive coupling.**

(57) Magnetic transducer with improved inductive coupling having intertwined yoke and coil; can include more than one coil, tied together, to increase net number of turns. Plurality of coils can be formed in single layer or multiple layers. Use of planar pancake coils simplifies design and manufacture. Center-tapped coils can be employed.

FIG.3
(TOP VIEW)

## TRANSDUCER WITH IMPROVED INDUCTIVE COUPLING

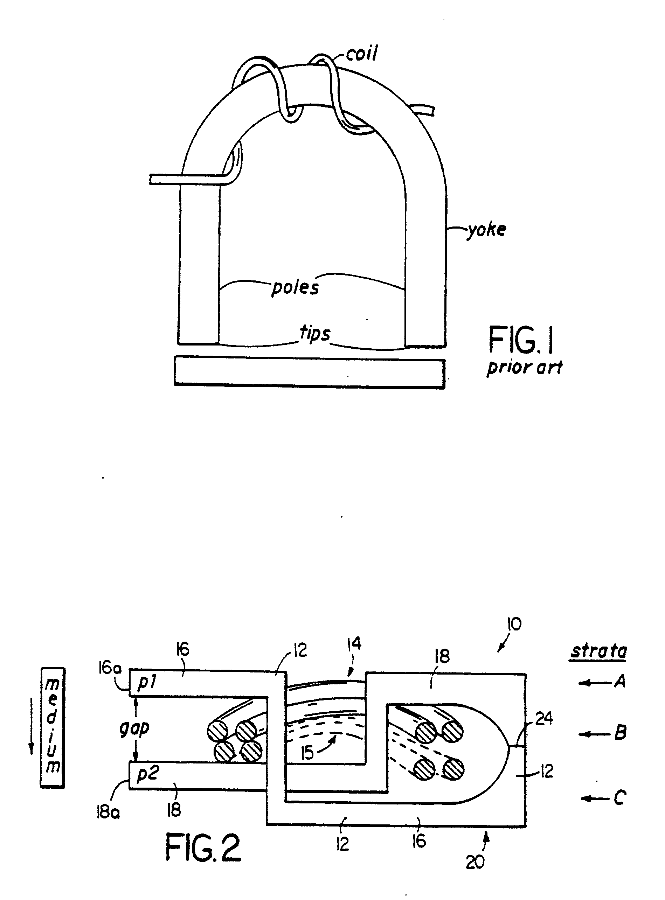

A typical thin film magnetic head may be thought of as a horseshoe magnet with a coil wrapped around it, as shown in Fig. 1. The horseshoe, or yoke, includes a pole structure which terminates at pole tips. In operation, flux from the coil can be applied via one of the pole tips to a recording medium to record bits of information as magnetic transitions on the medium, the flux circuit being completed via the second pole. During reading, flux from these recorded transitions can be read as the flux travels up from a pole tip to a read sensor (such as a coil), the flux circuit being completed via the second pole. This basic technology may be applied to achieve various monopole and multipole configurations.

Typically, solenoidal or pancake coils are used in such devices. The amount of flux imparted by any such coil to the pole during writing or sensed by the coil during reading is a function of many factors. For example, the write field depends upon write current level, number of coil turns, and reluctance of the pole among other things; the read signal, depends upon number of coil turns, the strength of the flux presented to the coil as it travels up through the yoke, and the reluctance of the yoke itself, among other things.

### Summary of the Invention

In one aspect of the invention, a magnetic transducer is provided having a yoke and at least one planar coil, the yoke and coil being intertwined so that one makes at least two flux interactions with (i.e., induction of signal in) the other, whereby more voltage is induced in the other by the one than if only a single interaction were made.

In another aspect of the invention, a magnetic transducer includes at least two arms connected together to form a yoke, the arms conducting flux representing a bit of information in and between at least two planes, at least one coil lying substantially in at least one intermediate plane, whereby the flux is conducted by the yoke to interact more than once with the coil. It is one feature of the invention that the arms and coil are deposited to lie in respective ones of three planes.

It is another feature that the coil is comprised of more than one pancake coil connected together at a respective end of each coil; at least two ends of the connected coils are connected to a respective one of at least two contact pads. Two (or more) pancake coils may be stacked in two or more intermediate planes and/or may lie all in one intermediate plane. The coil(s) may have a center tap, the center tap connected to a respective contact pad.

In another aspect of the invention, a system for reading information stored in a magnetic storage medium includes a transducer for sensing bits of information stored in the storage medium, with a device to enable reading of the sensed information, the transducer having at least two arms connected together to form a yoke, the arms conducting flux representing the bits of information in and between at least two planes, and at least one coil lying substantially in at least one intermediate plane, whereby the flux is conducted by the yoke to interact more than once with the coil. Preferably, at least two ends of the coil are connected to a respective one of at least two contact pads, the pads connected to the reading enabling device so that the bits of information sensed by the transducer can be read. The coil may include more than one pancake coil connected together. The reading enabling device may be a computer.

The coil may include at least two coils which lie in the intermediate plane, and/or at least two coils stacked in at least two intermediate planes. The coil may have a center tap connected to a respective contact pad.

Another aspect of the invention includes forming a magnetic transducer with improved inductive coupling between the yoke and coil, having a yoke with at least two pole pieces, each terminating in pole tips, the pole pieces coupled together at one end and lying near each other at the pole tips, a first and second coil space defined between the pole pieces, the coil spaces separated from each other by the pole pieces, at least one coil running within the coil spaces, whereby flux entering the tip of a first of the pole pieces can travel up that pole piece and down the other pole piece to its tip, and in such travel can interact at least twice with the coil.

### Description of the Preferred Embodiment

We first briefly describe the drawings.

Fig. 1 is a side view of a prior art transducer.

Fig. 2 is a partial cross-sectional view of an illustrative embodiment of the invention.

Fig. 3 is a top view of an illustrative embodiment of the invention.

Fig. 4 is a side view of Arm I of the embodiment of Fig. 3.

Fig. 5 is a side view of Arm II of the embodiment of Fig. 3.

The present invention is directed to increasing the output of a magnetic transducer. The theme of the invention is to intertwine the yoke and the coil(s) so as to substantially increase the inductive coupling function between the yoke and coil(s). In practice of the invention, a thin film head can be produced with high read back amplitude, low thermal noise, low inductance per turn squared, and with simplified processing requirements. As well, other transducer configurations may also benefit from the present invention.

Turning to the partial cross-sectional view of Fig. 2, a transducer 10 is shown conceptually as a magnetic yoke 12 which is woven through a planar coil 14 to increase the number of passes (or flux interactions) made between the coil 14 and yoke 12. Yoke 12 includes pole pieces 16, 18. The yoke flux path starts from the tip 16a of pole 16, passes through coil 14, and runs back to the back closure region 20 where poles 16 and 18 are joined at via 24. Thereafter, the yoke flux path again passes through coil 14 as it returns to tip 18a through pole 18. Hence, yoke 12 makes two passes through the single coil 14, thus nearly doubling the effective number of coil turns of transducer 10 compared to only a single pass through the coil such as in Fig. 1. A second coil 15 is shown in dotted outline in Fig. 2 to indicate a multiple coil layer embodiment of the present invention. As well, additional coils, passes, and poles may be incorporated within practice of the invention.

For simplicity of manufacture, it is preferable that coil 14 be planar, as shown in Fig. 2. In such embodiment, the yoke will pass from plane A above the coil, through the coil plane B to plane C below the coil. The advantage of this construction now becoming evident, the coil and yoke can be substantially formed in three process layers, with appropriate vias for interconnecting the upper and lower sections of the poles. This leads to process efficiencies and perhaps improved yields.

One feature of this invention is to greatly increase the effective number of turns in a thin film head with pancake coils connected together as a single coil while keeping the resistance (noise source) low, by causing the flux path to make multiple passes through the same coil. In principle, this design wraps the yoke around the coil as well as the coil around the yoke. In addition, the yoke can be caused to pass through a multitude of in-plane pancake coils instead of just one. The net number of turns is then the product of the number of yoke passes times the number of turns in each pancake times the number of pancakes. By obtaining a large number of turns in this fashion, high performance is achieved from a simply produced single layer pancake process. Also, the fact that pancakes are not stacked up reduces the inductance per turn squared and thus allows for more turns. Multiple coil layers are possible, as well, however, in order to further increase the number of turns, such as an embodiment of Fig. 2 including both coils 14 and 15.

For example, in a 56 turn design, the flux from the medium can make two passes through two pancake coils that have 14 turns each. The net number of turns is then $2 \times 2 \times 14 = 56$. Some loss of head efficiency (perhaps 10-20%) is expected due to the additional yoke length required. This is more than compensated by the increased number of turns. If the two pancake coils are in the same plane, then they can be deposited in the same process step. This eliminates perhaps three hard bake layers, one copper layer, and several via exposures.

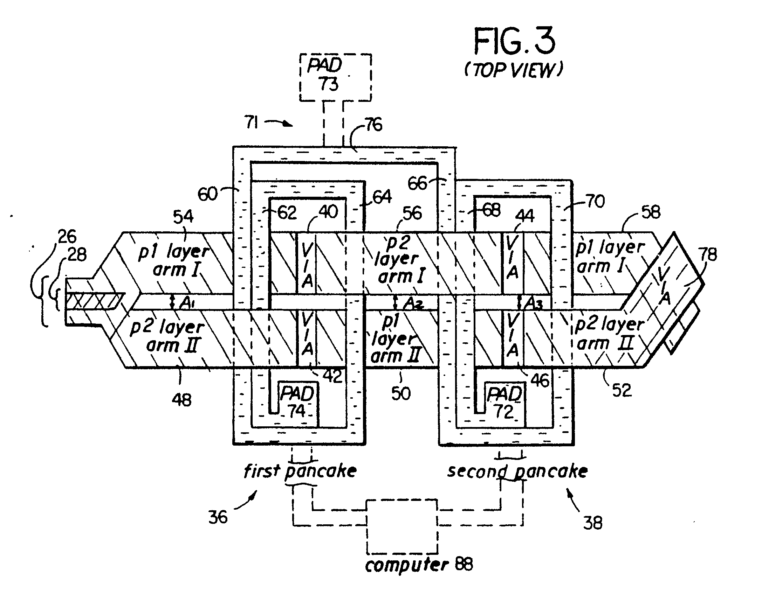

Turning now to Fig. 3, a top view of an illustrative multi-coil embodiment of the present invention is shown. Here, two poles are described as arms I, II, which intertwine with two pancake coils 36, 38. The two pancakes 36, 38 each have two turns. The arms are laterally separated from each other, as shown by arrows $A_1$, $A_2$, $A_3$.

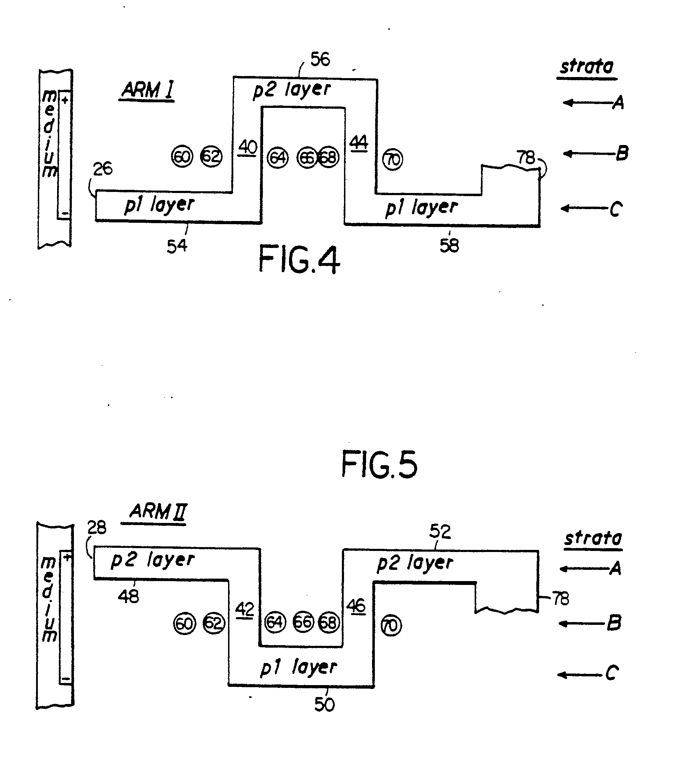

The configuration of Arm I of the embodiment of Fig. 3 is shown in the simplified side view of Fig. 4. The corresponding configuration of Arm II is shown in the simplified side view of Fig. 5. Arms I, II provide a flux path running to and from pole tips 26, 28, between an upper plane or strata A (the conventional P1 layer) and a lower strata C (the conventional P2 layer), with vias 40, 42, 44, 46, 78 provided for coupling the respective sections 48, 50, 52, 54, 56, 58 of the arms through a middle strata B. The coil may include a center tap 71, the signal at which being read out at a pad 73.

By comparing Figs. 3, 4, and 5, operation of the invention can now be readily appreciated. Imagine a di-bit on a recording medium with a transition under each pole tip 26, 28. Flux enters Arm I and is conducted back, first in section 54, then up through via 40 to section 56, and then down through via 44 to section 58. Arm I is connected to Arm II at via 78. Hence, the flux now returns through Arm II, starting from section 52, running down through via 46 to section 50, and up through via 42 to return the medium under pole tip 28 at the end of section 48. In this fashion, the yoke flux path weaves up and down through the coil, increasing inductive coupling between coil and yoke. Also, even though the flux path is long, leakage flux is kept low by separating the two yoke arms laterally. The signal induced in the coil is read out via pads 72, 74, typically by a computer 88 through read electronics.

One advantage of the present invention is the achievement of greater magnetic interaction between coil and yoke in a simplified design. In particular, the yoke makes a plurality of passes through the coil, where only two structures (arms I, II) must be formed between various deposition layers, or strata, in the device. This is simpler in structure and easier to manufacture than where a multi-turn coil must be formed over several strata. Hence, the simpler component (the yoke) takes the more complex configuration, and the more complex component (the coil) takes the simpler configuration. This results in a more effective head more efficiently made. Other embodiments are within the following claims.

## Claims

1. A magnetic transducer comprising:
a yoke and at least one planar coil, the yoke and coil being intertwined so that the one makes at least two flux interactions with the other, whereby more voltage is induced in the other by the one than if only a single interaction were made.

2. The magnetic transducer of claim 1 wherein at least two arms are connected together to form the yoke,
the arms conducting flux representing a bit of information in and between at least two planes,
the coil lying substantially in at least one intermediate plane.

3. The magnetic transducer of claim 2 wherein the arms and coil are deposited to lie in respective ones of three planes.

4. The magnetic transducer of claim 1 wherein the coil is comprised of more than one pancake coil connected together at a respective end of each coil.

5. The magnetic transducer of claim 4 wherein at least two ends of the connected coils are connected to a respective one of at least two contact pads.

6. The magnetic transducer of claim 2 wherein at least two pancake coils lie in the intermediate plane.

7. The magnetic transducer of claim 2 wherein at least two pancake coils are stacked in at least two intermediate planes.

8. The magnetic transducer of claim 6, wherein at least two pancake coils are stacked in at least two intermediate planes.

9. The magnetic transducer of claim 5 wherein the coil has a center tap and the center tap is connected to a respective contact pad.

10. A system for reading information stored in a magnetic storage medium, comprising
a transducer for sensing bits of information stored in the storage medium, with a device to enable reading of the sensed information,
the transducer having at least two arms connected together to form a yoke,
the arms conducting flux representing the bits of stored information in and between at least two planes, and
at least one coil lying substantially in at least one intermediate plane,
whereby the flux is conducted by the yoke to interact more than once with the coil.

11. The system of claim 10 wherein the coil is comprised of more than one pancake coil connected together.

12. The system of claim 10 wherein at least two ends of the coil are connected to a respective one of at least two contact pads, the pads connected to the reading enabling device so that the bits of information sensed by the transducer can be read.

13. The system of claim 11 wherein at least two pancake coils lie in the intermediate plane.

14. The system of claim 11 wherein at least two pancake coils are stacked in at least two intermediate planes.

15. The system of claim 13 wherein at least two pancake coils are stacked in at least two intermediate planes.

16. The system of claim 12 wherein the coil has a center tap and the center tap is connected to a respective contact pad.

17. The system of claim 10 wherein the reading enabling device is a computer.

18. The system of claim 12 wherein the reading enabling device is a computer.

19. A magnetic transducer comprising
at least two arms connected together to form a yoke,
the arms conducting flux representing a bit of information in and between at least two planes,
at least one coil lying substantially in at least one intermediate plane,
whereby the flux is conducted by the yoke to interact more than once with the coil.

20. A magnetic transducer with improved inductive coupling between the yoke and coil comprising: a yoke with at least two pole pieces, each terminating in pole tips, the pole pieces coupled together at one end and lying near each other at the pole tips, a first and second coil space defined between the pole pieces, the coil spaces separated from each other by the pole pieces, and at least one coil running within the coil spaces,
whereby flux entering the tip of a first of the pole pieces can travel up that pole piece and down the other pole piece to its tip, and in such travel can interact at least twice with the coil.

coil

yoke

poles

tips

FIG.1
prior art

medium

16
16a
p1
gap
18a
18
p2
18
12
14
18
10
strata
← A
← B
24
15
← C
12
12
16
20

FIG.2

FIG.3
(TOP VIEW)

FIG.4

FIG.5